(19) Europäisches Patentamt European Patent Office Office européen des brevets

(11) **EP 2 797 755 B1**

(12) **EUROPEAN PATENT SPECIFICATION**

(45) Date of publication and mention
of the grant of the patent:
**05.12.2018 Bulletin 2018/49**

(51) Int Cl.:
**B60C 9/20** *(2006.01)*    **B60C 11/00** *(2006.01)*

(21) Application number: **12862694.2**

(22) Date of filing: **18.12.2012**

(86) International application number:
**PCT/US2012/070230**

(87) International publication number:
**WO 2013/101532 (04.07.2013 Gazette 2013/27)**

(54) **TIRE WITH COMPLEX BELTS**

REIFEN MIT KOMPLEXEN RIEMEN

PNEU À CEINTURES COMPLEXES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2011 US 201161581974 P**

(43) Date of publication of application:
**05.11.2014 Bulletin 2014/45**

(73) Proprietor: **Compagnie Générale des
Etablissements Michelin
63000 Clermont-Ferrand (FR)**

(72) Inventors:
• **LIMROTH, John, Charles
Greenville, SC 29605 (US)**

• **RHYNE, Timothy, Brett
Greenville, SC 29605 (US)**

(74) Representative: **Casalonga
Casalonga & Partners
Bayerstraße 71/73
80335 München (DE)**

(56) References cited:
**DE-A1-102004 029 987    JP-A- H0 632 111
US-A- 3 024 828    US-A- 5 411 069
US-A- 5 421 390    US-B2- 7 168 470
US-B2- 7 559 349**

**Description**

The present invention relates to a tire according to the preamble of claim 1, such as it is e.g. known from DE 10 2004 029987 A1, US 3 024 828 or JP H06 32111 A.

**Background**

Since the advent of the pneumatic tire, tire engineers have had to deal with a variety of vehicle performance parameters for which the tire has a significant effect. Some examples of these performance attributes are dry and wet traction, handling, comfort, and noise. One of the advances that tire engineers have made to improve these performance attributes is to increase the width of the tire White at the same time increasing the rim diameter of the wheel upon which the tire is mounted. The result of these design choices is that the sldewall height is reduced. Sidewall height is measured as the radial height between the center of the tread and the nominal wheel diameter. The ratio of the section width to the sidewall height forms a dimensionless parameter referred to as the "aspect ratio" of the tire. Tires that are commonly found on high performance vehicles may have a very large width, 300 mm or more, and a very low aspect ratio, often in the range of 0.25.

These very wide tires have presented challenges to tire engineers to maintain high levels of wet traction at the speeds that high performance vehicles may be capable of. A tire that is mounted on the vehicle, then loaded, and inflated to its design values forms a quasi-rectangular shaped contact surface with the road surface. To maximize road holding it Is desirable to maintain this tread contact surface under a variety operating conditions. In particular, when the tire rolls through a deep-water layer on the road and at high speeds, the grooves in the tire tread may not be able of displacing the water layer. Under these conditions, a hydrodynamic lift occurs that reduces the extent of tread contact surface and may reduce the wet traction level afforded by the tire.

In an attempt to solve this problem, tire engineers have employed various means to add adeep or wide longitudinally groove in the center portion of the tread to allow the tire to displace the water. This groove configuration effectively creates two contact surfaces that are about one-half the width that would be found on a conventional tire. An example of this approach is embodied in United States Patent 5, 176,766, wherein the tread grooves of a tire of otherwise conventional construction have been modified to provide a center groove that it much wider than the grooves to either side. All grooves have a conventional depth. This accomplishes the desired improvement on a new tire, but as the tire wears, the central groove becomes narrow and now the contact surface resembles that of a conventional tire.

In another approach described in United States Patent 3,830, 273 the tire's construction is modified by adding an annular reinforcement at the centerline of the tire. This allows the meridian profile of the tire's carcass to be modified in a manner akin to joining two narrower tires at the center to form a single, wide tire. This approach has the advantage that the central groove can be made both wider and deeper, and that the central groove is maintained throughout the service life of the tire. However, a tire of this construction Is not easily manufactured on conventional tire building machines.

Both these and other attempts to achieve such a shape have led to manufacturing complexities and/or compromises in other tire performances. Therefore, it would be advantageous to provide a new approach to achieving the dual contact surface while avoiding the manufacturing complexities and/or compromises in other tire performance attributes.

**SUMMARY OF THE INVENTION**

The above presented problem is solved by a tire according to independent claim 1. The dependent claims relate to advantageous embodiments.

In various embodiments of the exemplary tire, the reinforcing layers have continuously varying bias angle β of the reinforcement elements in the axial direction of the tire. The tread reinforcement may be a single, unitary or continuous, tread reinforcing layer extending the width of the tire In which the bias angles β of the reinforcement elements are continuously variable in the axial direction.

In another embodiment of the exemplary tire, the left tread reinforcing layer and the right tread reinforcing layer have a convex shape and the central tread reinforcing layer has a convex shape. In other embodiments, the tread reinforcing layer comprises a left outer convex section, a left flat section, and a left inner convex section, a central section, a right inner convex section, a right flat section, and a right outer convex section.

**BRIEF DESCRIPTION OF THE DRAWINGS**

A full and enabling disclosure of the present Invention, including the best mode thereof, directed to one of ordinary skill In the art, is set forth in the specification, which makes reference to the appended figures, in which:

Fig. 1 provides a cross-sectional view through a tire meridian plane of a tire representative of United States Patent 3,830,273.

Fig. 2 provides a representation of a tire **100** of a size 335/25ZR20 according to a first exemplary embodiment showing a dual tread with wide center groove.

Fig. 3 provides a cross-section view through a tire meridian plane of the tire **100** of the invention.

Fig. 4 provides a perspective view of the complex belt arrangement of the tire **100.**

Fig. 5 provides a view looking radially inward of the complex belt arrangement of the tire **100.**

Fig. 6a and 6b provide a schematic representation of a tire having bias plies and the nomenclature and coordinate systems associated therewith.

Fig. 7 depicts the shape of the bias membrane when $\beta_c$ is above the critical belt angle for a complete membrane shape for $r_e$ = 250, $r_c$ = 300, $\beta_c$ = 30 deg.

Fig. 8 depicts the shape of the bias membrane when $\beta_c$ is equal to the critical belt angle

Fig. 9 depicts the shape of the bias membrane when $\beta_c$ is below the critical belt angle.

Fig. 10 depicts a complex belt arrangement of the tire **100.**

Fig. 11 depicts an exemplary embodiment of a tire building drum for the complex belt arrangement of the tire **100.**

Fig. 12a depicts an exemplary embodiment of a complex belt arrangement of the tire **100** having a single overlap portion.

Fig. 12b depicts an exemplary embodiment of a complex belt arrangement of the tire **100** having multiple overlap portions.

Fig. 13 provides a representation of a tire **200** of a second exemplary embodiment showing a dual tread with wide center groove.

Fig. 14 depicts a complex belt arrangement of the tire **200.**

Fig. 15 depicts the axial variation of the belt angle $\beta$ for the complex belt arrangement of the tire **200.**

Fig. 16 provides a view looking radially inward of the complex belt arrangement of the tire 200, further illustrating the axial variation of the belt angle $\beta$.

## DETAILED DESCRIPTION

The present invention provides a unique belt arrangement that may be used in a pneumatic tire to achieving the dual contact surface while avoiding the manufacturing complexities and/or compromises in other tire performance attributes. For purposes of describing the invention, reference now will be made in detail to embodiments and/or methods of the invention, one or more examples of which are illustrated in or with the drawings. Each example is provided by way of explanation of the invention, not limitation of the invention. In fact, it will be apparent to those skilled in the art that various modifications and variations can be made in the present invention without departing from the scope or spirit of the invention. For instance, features or steps illustrated or described as part of one embodiment, can be used with another embodiment or steps to yield a still further embodiments or methods. Thus, it is intended that the present invention covers such modifications and variations as come within the scope of the appended claims and their equivalents.

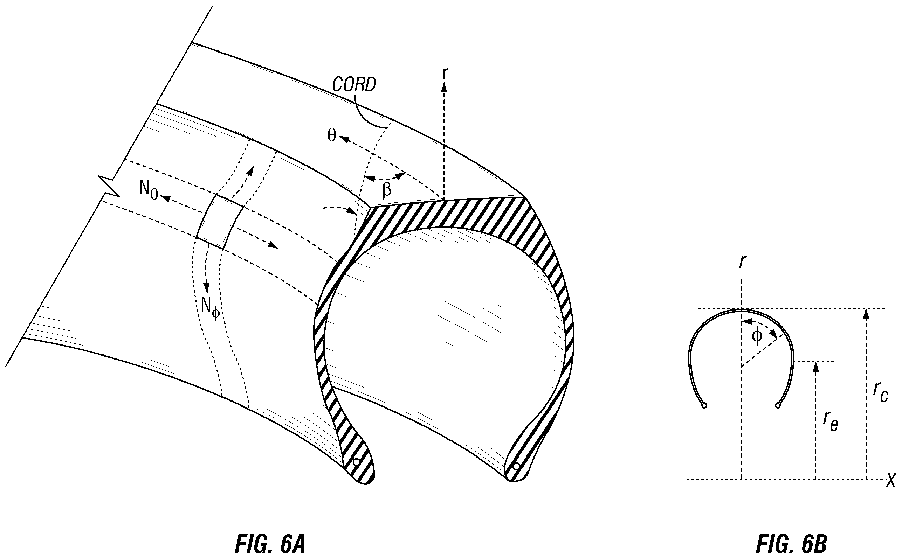

The following terms are defined for this disclosure as follows, the details of which are as shown in Fig. 6. Throughout this disclosure, a cylindrical coordinate system is used.

"Axial direction," x refers to a direction z parallel to the axis of rotation of a tire, and/or wheel as it travels along a road surface.

"Radial direction or Radius," r refers to a direction r that is orthogonal to the axial direction and extends outward from the axis of rotation.

"Equatorial plane" refers to a plane that passes perpendicular to the axis of rotation and bisects the tire structure.

"Equator" refers to the widest portion of the profile of a reinforcing layer.

"Meridian plane" refers to a plane that passes parallel to and through the axis of rotation of the tire structure. This view is commonly known as a "cut plane."

"Concave" means that the curvature of the tread reinforcing layers layer as seen in the two-dimensional view of a meridian plane has a center of curvature located outward from the tire.

Convex" means that the curvature of the tread reinforcing layers layer as seen in the two-dimensional view of a meridian plane has a center of curvature located inward from the tire. A conventional tire has convex tread reinforcing layers.

"Crown Radius" $r_c$ means the radius at which a tangent to the membrane equilibrium curve is horizontal.

"Equator Radius," $r_e$ is the radius at which a tangent to a convex section of the membrane equilibrium curve is vertical.

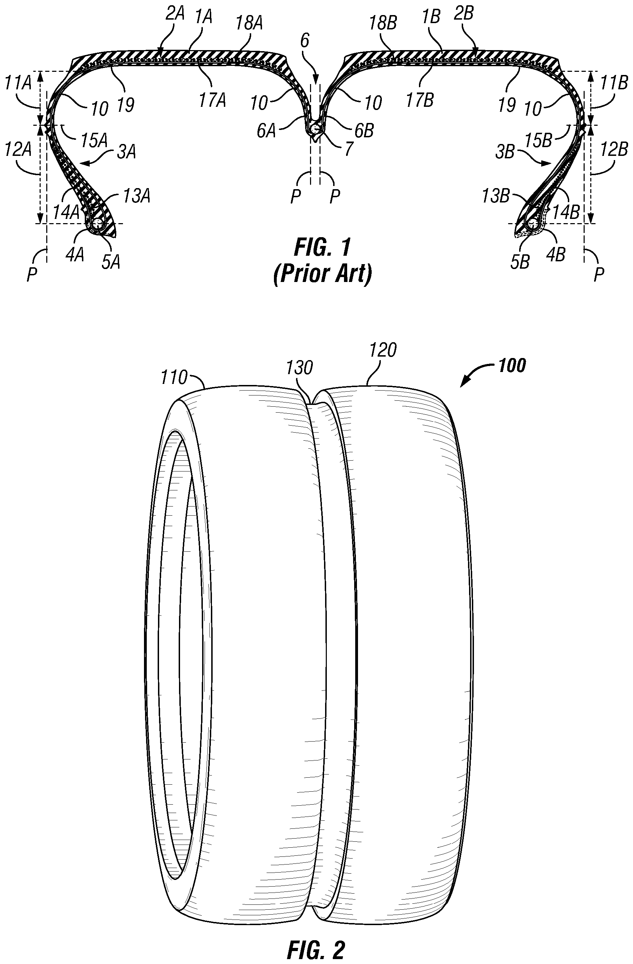

Fig. 1 provides a cross-sectional view through a tire meridian plane of a tire representative of the prior efforts to obtain a tire with a dual contact surface as described in United States Patent 3,830,273. A tire is formed with two treads spaced transversely from each other, two outer sidewalls terminating in beads reinforced with bead wires, and, between the treads, a connection comprising in its center a wire rod forming a closed loop of a diameter intermediate between the diameter of the bead wires and the diameter of the treads. Each tread has its own independent reinforcement, and each sidewall has a rigid zone close to the bead and a flexible zone close to the tread. The connection has on opposite sides of the central wire rod substantially the same structure and the same membrane equilibrium profile when the tire is inflated, and therefore the same radial flexibility, as the flexible zones of the two outer sidewalls.

Fig. 2 shows an exemplary representation of a tire **100** of the invention of size 335/25ZR20 showing a left tread portion **110** and a right tread portion **120,** wherein the tread portions are axially separated by a single longitudinally oriented groove **130.** In this exemplary embodiment of tire **100,** the groove **130** is much wider and deeper than the grooves commonly found on conventional pneumatic tires. That is to say, the central groove has a depth in the radial direction greater than the wearable tread depth of the tire as would commonly be defined by industry standard tread wear indicators in adjacent grooves or, in the limit, by wear of tread that would expose the tread reinforcement.

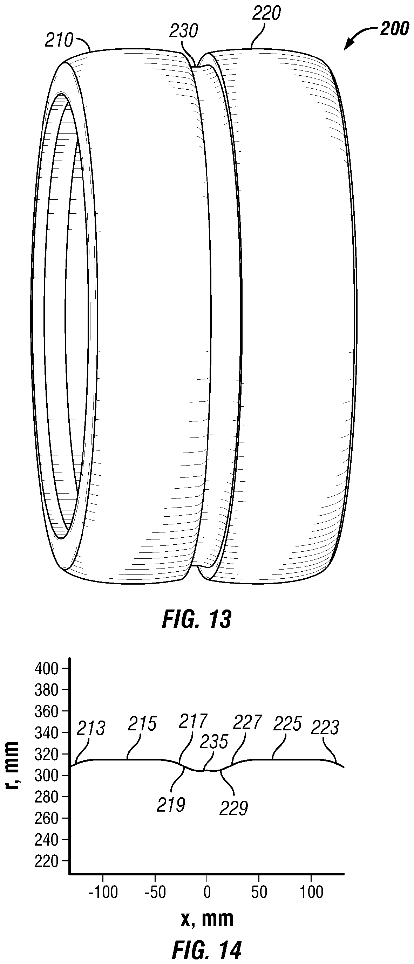

Although the tire **100** and the tire **200** (see Fig. 13), have the groove **130 (230)** located at the centerline of the tire, it is within the scope of the invention to a have the groove 130 located at other than the centerline to produce a tire having an asymmetric tread profile. It is also within the scope of the invention have a tread comprising a plurality of longitudinal grooves and each longitudinal groove **130 (230)** is separated laterally by a tread potion. The defining theory and equations disclosed herebelow will apply to any such configuration.

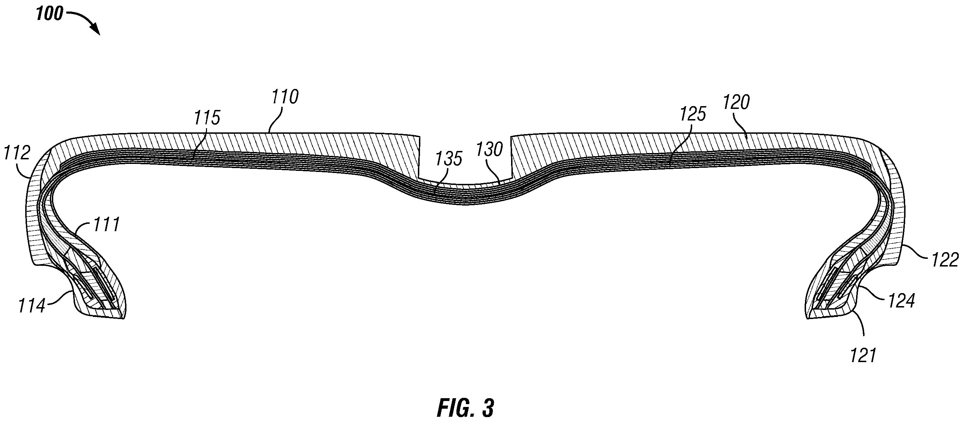

Now turning to Fig. 3, which provides a cross-sectional view through the tire meridian plane of the tire **100** of the invention. The tire **100** has a carcass layer **111** comprising substantially radially oriented reinforcing cords to form a left sidewall **112** and a right sidewall **122.** The reinforcements of the carcass layer **111** are anchored, respectively, in the left bead portion **114** and the right bead portion **124.** The left sidewall **112** extends radially to join the left tread portion **110.** Similarly, the right sidewall **122** extends radially to join the right tread portion **120.** When mounted on a rim (not shown), the tread, sidewall, and bead portions form a cavity by which the tire is inflated for operation under various applied loads.

In the prior tire shown in Fig. 1, each tread portion has its own independent reinforcing layers that are similar to the reinforcing layers found in a convention tire. Moreover, in this tire, the reinforcing layers have an axial width less than the axial width of the tread portions. In this tire, only the carcass layer provides reinforcement between the axially inward extent of the reinforcing layers and the wire rod connection.

In a first exemplary embodiment of the tire **100,** a shape of the tread reinforcement in the tire meridian plane that has at least a central tread reinforcing layer **135** that is concave and can be used to create a groove in the belt at the center of the tire. A pair of tread reinforcing layers in each of the tread portions that has a conventional, convex shape can be joined laterally to the central reinforcing layer to create a reinforcing layer that extends the full width of the tire. As depicted in Fig. 3, the tire **100** has a left tread reinforcing layer **115,** a right tread reinforcing layer **125,** and a central tread reinforcing layer **135** radially inward from the groove 130. This description of the tire **100** having three separate tread reinforcing layers is only an exemplary embodiment. It is within the scope of the invention for the tire **100** to have a plurality of tread reinforcing layers. Alternatively, the tire **100** may have a single tread reinforcing layer in which the belt angles $\beta$ vary in the axial direction. As is apparent from the cut plane view shown in Fig. 3, the tire **100** eliminates the need for the wire rod connection while preserving a deep central groove in the tread. Such a tire **100** should have superior hydroplaning performance when compared to a conventionally constructed, wide performance tire, especially at the end of tread life.

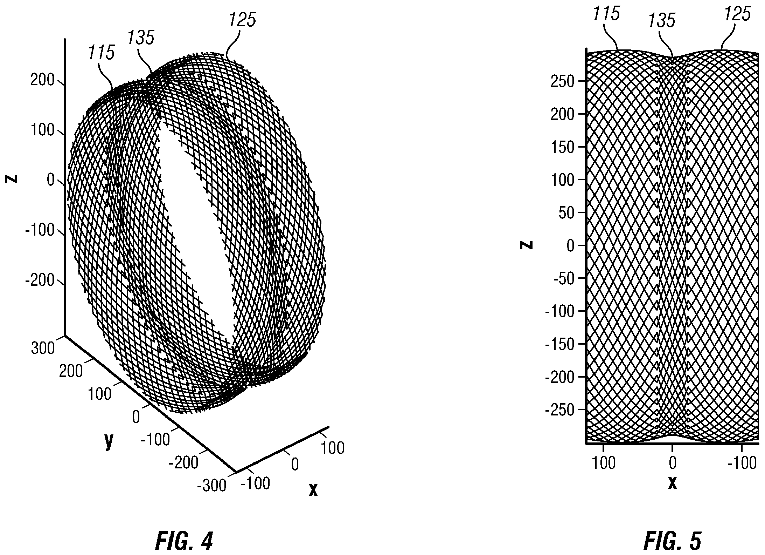

An inventive principle of tire **100** having a complex belt design is to specify reinforcement elements having reinforcement at opposing bias angles $\beta$ relative to the longitudinal direction of the tire to achieve separate equilibrium membrane shapes that are joined together to create a continuous, complex shape. One skilled in the art of tires will understand the physical principles related to the equilibrium shape of a reinforced membrane when it is subjected to inflation pressure (see e.g. "Mechanics of Pneumatic Tires, 2nd Ed," Samuel K. Clark, ed., Chapter 7). Fig. 4 and Fig. 5 provide a schematic representation of a complex belt design where the left tread reinforcing layer **115,** the right tread reinforcing layer **125,** and the central tread reinforcing layer **135** form a continuous belt design, which is convex in the outer portions and concave in the central portion. In the embodiments described, the tread reinforcing layers comprise a plurality of reinforcement elements of substantially parallel reinforcements arranged in opposing layers, and each of the opposing layers has a bias angle $\beta$ relative to the circumferential direction. The material for the reinforcement elements may be chosen from any of the materials known to tire designers for use as belt materials. For example, steel cords, nylon, polyamide, and glass reinforcements may be suitable. As shown in Fig. 6, the bias angle $\beta$ is the included angle between the cord direction and the circumferential direction of the tire. The bias angles $\beta$ of the tread reinforcing layers may be equal in magnitude and opposite in direction relative to the circumferential direction for each opposing layer. It is within the scope of the invention that the opposing layers comprise bias angles $\beta$ that are not equal and opposite as well as reinforcements that may be linear in form or may be nonlinear in form, such as wavy reinforcements. As used herein, the concept of wavy includes reinforcements whose bias angle $\beta$ may vary in the axial direction across the width of the reinforcement.

An approach to specifying these parameters will now be described. As used herein, the subscript **1** indicates properties of the central tread reinforcing layer that is concave and subscript **2** refers to the tread reinforcing layers that are convex. To achieve the desired shape, the concave central tread reinforcing layer **135** must have a bias angle $\beta_1$ that is less the bias angle $\beta_2$ for the left and right tread reinforcing layers **115** and **125**. The In addition, the crown radius $r_{C1}$ of the central tread reinforcing layer **135** must be less than the crown radius $r_{C2}$ of the left and right tread reinforcing layers **115** and **125**. These parameters, as well as equator radii $r_e$ of the reinforcing layers, bias angles $\beta_1$ and $\beta_2$, and the radial location of the joints between the reinforcing layers provide a number of design parameters that may be varied to achieve the desired complex membrane shape.

To understand better the methods by which the parameters of the reinforcing layers may be specified, it is necessary to introduce the concept of a critical value of the belt bias angle $\beta_c$ in a bias ply membrane. As used herein, $\beta_c$ is the bias belt angle corresponding the point on the membrane equilibrium curve where $r = r_c$. The critical belt angle $\beta_{c\_crit}$ is defined as the bias angle $\beta_c$ corresponding to a membrane equilibrium curve having an infinite radius of curvature at $r = r_c$. That is to say, when the bias angle $\beta_c$ is equal to the critical belt angle $\beta_{c\_crit}$ is, the membrane equilibrium curve is flat.

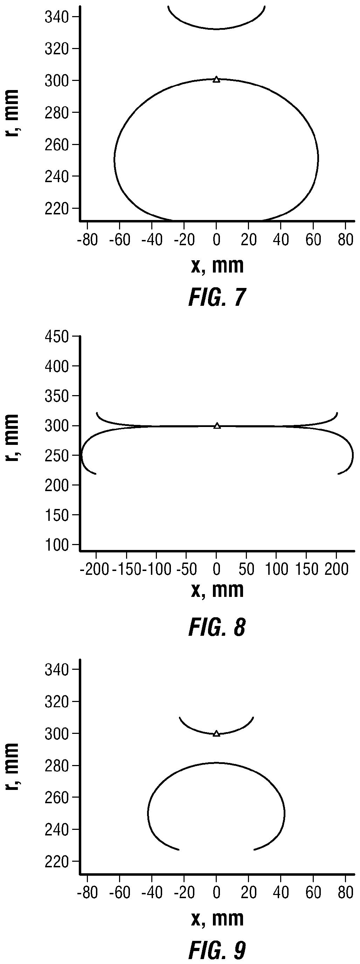

**Shape of the bias membrane when $\beta_c$ is above the critical belt angle:** Turning to Fig. 7, consider the shape of the bias membrane when $\beta_c$ is above the critical belt angle. This shape can be described by the equation below which is derived from equilibrium membrane theory:

$$\frac{dx}{dr} = \frac{\left(r^2 - r_e^2\right)\left(r_c^2 - r^2 \cos^2 \beta_c\right)^{1/2}}{\left[\left(r_c^2 - r_e^2\right)\left(r_c^2 \sin^2 \beta_c\right) - \left(r^2 - r_e^2\right)^2 \left(r_c^2 - r^2 \cos^2 \beta_c\right)\right]^{1/2}}$$

The denominator of this equation has three roots R1, R2, and R3 corresponding to maximum and minimum points of the equilibrium shape. At these points, the slope dz/dr is infinite, and a tangent to the curve at these points would be perfectly horizontal.

$$R1, R3 = \frac{1}{2}\left\{\left(r_c^2 \tan^2 \beta_c + 2r_e^2\right) \mp r_c \tan \beta_c \left[r_c^2 \tan^2 \beta_c + 4\left(r_c^2 - r_e^2\right)\right]^{1/2}\right\}$$

$$R2 = r_c$$

In addition, there are two points where the numerator of the slope equation is zero and the curve is vertical. These zeros occur at:

$$Z1 = r_e$$

$$Z2 = \frac{r_c}{\cos \beta_c}$$

Note that the second zero is at the maximum possible radius of the membrane corresponding to a bias angle of zero. This represents the point at which the bias membrane would be oriented in the circumferential direction creating a hoop. This radius obviously cannot be exceeded.

To examine the shape of the membrane at different radii, the slope equation may be evaluated. An example case with $r_e = 250$, $r_c = 300$, $\beta_c = 30$ is examined in Table 1 below. Radii at each denominator root and numerator zero are evaluated, as well as at sample radii between and above or below these values. In addition, the angle $\varphi$, radius of curvature r1 and bias angle $\beta$ as defined in the membrane theory notes are evaluated. Note that $r_c$ is indicated in the Fig. 7 with a small triangle.

Table 1: Membrane Equation Values at Various Radii for $r_e = 250$, $r_c = 300$, $\beta c = 30$ deg.

| R (mm) | dx/dr | $\phi$ (deg) | $r_1$ (mm) | $\beta$ (deg) |
|---|---|---|---|---|
| r = 200 | 0- 1.5079i | -90 + 45.749i | 36.91 | 54.736 |
| **R1 = 212.36** | $\infty$ | -90 | 36.712 | 52.191 |

(continued)

| R (mm) | dx/dr | $\phi$ (deg) | $r_1$ (mm) | $\beta$ (deg) |
|---|---|---|---|---|
| r = 230 | 0.6121 | -31.472 | 37.305 | 48.398 |
| Z1 = $r_e$ = 250 | 0 | 0 | 39.727 | 43.806 |
| r = 275 | -0.7129 | 35.483 | 48.246 | 37.453 |
| R2 = $r_c$ = 300 | -∞ | 90 | 84.615 | 30 |
| r = 315 | 0 - 2.2923i | 90 - 26.79i | 451.71 | 24.588 |
| R3 = 331.52 | ∞ | 90 | -53.054 | 16.862 |
| r = 340 | 1.0985 | 47.687 | -20.977 | 11.039 |
| Z2 = Rmax = 346.41 | 0 | 0 | 0 | 0 |
| r = 350 | 0 + 0.5329i | 0 + 34.047i | 0 - 10.468i | 0 + 8.2415i |

The first radius r = 200 results in an imaginary solution (denoted by the imaginary component 'I") to the slope equation, which indicates that the membrane shape does not exist below R1. From R1 to R2, the values correspond to the bias membrane shape as defined by basic membrane theory. At a radius just above R2 of 315, an imaginary solution is found again indicating that the equilibrium curve does not exist at this radius. From R3 to Rmax, real values of the membrane equations indicate that another portion of the curve exists at a radius above that of the basic membrane shape. At R3, the angle $\phi$ is 90 degrees but the radius of curvature R1 is negative. Note that this is equivalent to an angle $\phi$ of -90 degrees with a positive radius of curvature, indicating a shape that is concave. At Rmax, the curve is apparently vertical. At a radius beyond Rmax, the solutions to the equations are again imaginary as expected since Rmax is the maximum possible radius of the membrane.

**Shape of the bias membrane when $\beta_c$ is equal to the critical belt angle:** The shape of the membrane curves at the critical belt angle is shown in Fig. 8. The two curves touch at $r = r_c$, as shown by the small triangle located at the equatorial plane of the tire. The membrane shape is clearly wide and flat at this point. Note that the curves in the plot are not infinitely wide because the computed critical belt angle is rounded to two decimal places.

The critical belt angle for the given membrane parameters can be computed directly as described in membrane theory.

$$\beta_{c\_crit} = \arccos\left(\sqrt{\frac{2}{3 - \frac{r_e^2}{r_c^2}}}\right)$$

For the given example parameters, $\beta_{c\_crit}$ is 21.34 deg. At this angle, the resulting roots R2 and R3 are equal. Table 2 shows a similar analysis of a range of radii to verify the existence of a solution to the membrane shape. Note that here there is no middle range between R2 and R3 at which the curve does not exist because the two curves touch at this point. Also, note that r1 is infinite at this point, corresponding to an infinitely flat belt.

Table 1: Membrane Equation Values at Various Radii for $r_e$ = 250, $r_c$ = 300, $\beta_c$ = 21.34 deg.

| r | dx/dr | $\phi$ (deg) | $r_1$ | $\beta$ (deg) |
|---|---|---|---|---|
| r = 200 | 0- 1.2144i | -90 + 66.886i | 27.129 | 51.614 |
| R1 = 220.8 | ∞ | -90 | 27.668 | 46.721 |
| r = 230 | 0.90633 | -42.187 | 28.396 | 44.43 |
| Z1 = $r_e$= 250 | 0 | 0 | 31.745 | 39.086 |
| r = 275 | -0.93445 | 43.059 | 45.596 | 31.371 |
| R2 = R3 = $r_c$ = 300 | ∞ | 90 | ∞ | 21.34 |

(continued)

| r | dx/dr | φ (deg) | $r_1$ | β (deg) |
|---|---|---|---|---|
| r = 315 | 1.1893 | 49.941 | -24.814 | 12.038 |
| **Z2 = Rmax = 322.08** | 0 | 0 | 0 | 0 |
| r = 350 | 0 + 0.93097i | 0 + 95.431i | 0 -12.934i | 0 + 23.687i |

**Shape of the bias membrane when $\beta_c$ is below the critical belt angle:** To examine the shape of the membrane at angles of $\beta_c$ below the critical belt angle, the equations for various radii are again examined in

Table 2 below for $\beta_c$ = 15 deg. The value of R3 is now less than that of R2 = $r_c$. Between R3 and R2 the solution to the slope equation again becomes imaginary, indicating the existence of two distinct curves just as before.

Table 2: Membrane Equation Values at Various Radii for $r_e$ = 250, $r_c$ = 300, $\beta_c$ = 15 deg.

| r | dx/dr | φ (deg) | $r_1$ | β (deg) |
|---|---|---|---|---|
| r = 200 | 0 - 1.0983i | -90 + 87.693i | 19.394 | 49.913 |
| **R1 = 228.07** | ∞ | -90 | 20.562 | 42.75 |
| r = 240 | 0.4858 | -25.911 | 21.976 | 39.399 |
| **Z1 = $r_e$= 250** | 0 | 0 | 23.991 | 36.396 |
| r = 65 | -0.68663 | 34.475 | 30.195 | 31.435 |
| **R3 = 281.86** | -∞ | 90 | 59.888 | 24.834 |
| r = 290 | 0 - 2.5589i | 90 - 23.648i | 271.34 | 20.976 |
| **R2 = $r_c$ = 300** | ∞ | 90 | -40.635 | 15 |
| r = 305 | 1.3788 | 54.048 | -17.965 | 10.88 |
| **Z2 = Rmax = 310.58** | 0 | 0 | 0 | 0 |
| 350 | 0 + 0.9749.1.i | 0 + 125.07i | 0 - 9.0935i | 0 + 28.569i |

The shape of the membrane for $\beta c$ = 15 deg. is shown in Fig. 9. Note that $r_c$, as indicated by the triangle, no longer corresponds to the crown of the bottom curve but instead is the base of the upper curve. This upper curve corresponding to a belt angle $\beta c$ less that the critical belt angle can be used to form a concave portion of the complex belt. Instead the crown of the lower curve is now located at R3.

Therefore, an exemplary embodiment of the tire **100** may be obtained with a shape of the tread reinforcement that has a central tread reinforcing layer **135** that has a concave shape and a left tread reinforcing layer **115** and a right tread reinforcing layer **125** in each of the tread portions, each of which has a convex shape. These tread reinforcing layers may be joined laterally to the central reinforcing layer to create a reinforcing layer that extends the full width of the tire.

An inventive principle of tire **100** having a complex belt design is to specify the bias angles β of the reinforcement elements in each of the reinforcing layers to achieve separate equilibrium membrane shapes that are joined together to create the continuous, complex shape. The concave curve is constructed from the computed values of the angle φ and the radius R1 just as the convex curves are constructed as described using membrane theory. The angle of the reinforcements in the central tread reinforcing layer **135** must be lower than the critical belt angle, therefore the shape will be concave, and $r_{c1}$ will not actually be the "crown" of this reinforcing layer.

In order to create a shape that is physically realizable, the slopes ΔR/ΔZ of the profile of the tread reinforcing layers must be the equal at the joint locations. This slope may be defined by the angle φ of the reinforcing layers, as shown in Fig 6. In addition, for the complex membrane shape to be in a state of stress equilibrium, the stress $N_\phi$ of both reinforcing layers must be the same at the joint location. These equilibrium conditions result in constraints on some of the design parameters.

First, an equator radius $r_{e1}$ the central tread reinforcing layer **135** and an equator radius $r_{e2}$ of the left and right tread reinforcing layers **115** and 125 will be determined. As described above, the equilibrium shape of a complex membrane requires the following constraints at the joint:

$$\phi_{1,j} = \phi_{2,j}$$

$$N_{\phi 1,j} = N_{\phi 2,j}$$

From equilibrium membrane theory, the angle $\phi$ and the stress $\mathbf{N}_\phi$ are related by:

$$N_\phi = P \frac{r^2 - r_e^{\,2}}{2r \sin \phi}$$

The joint location may be defined by a joint radius $\mathbf{r_J}$. Therefore, each of the reinforcing layers layer must satisfy the following condition:

$$N_{\phi i,j} = P \frac{r_j^{\,2} - r_{ei}^{\,2}}{2r_j \sin \phi_{i,j}}$$

Where: *i* designates the respective layer.

Thus the angle $\phi$ and stress $\mathbf{N}_\phi$ of each reinforcing layers will be equal at the joint radius only if $\mathbf{r_{e1}} = \mathbf{r_{e2}}$. In other words, if each reinforcing layer has the same equator radius $\mathbf{r_e}$, then the stress $\mathbf{N}_\phi$ at the joint will be in equilibrium when $\phi\mathbf{1} = \phi\mathbf{2}$ at the joint radius $\mathbf{r_J}$.

Next, the joint location will be determined. The crown radius $\mathbf{r_{c2}}$ of the left and right tread reinforcing layers **115** and **125** will define the outer radius of the belt package, and the crown radius $\mathbf{r_{C1}}$ will define the inner radius of the belt package. The bottom of central tread reinforcing layer **135** is defined by the crown radius $\mathbf{r_{C1}}$. The groove depth at the center of the tire will be defined simply as $\mathbf{r_{C2} - r_{C1}}$.

The bias belt angles $\beta_{\mathbf{c1}}$ and $\beta_{\mathbf{c2}}$ may also be constrained design parameters since their values will likely be limited by manufacturing concerns. With these parameters defined the joint radius $\mathbf{r_J}$ may be determined by setting the angles $\varphi$1j and $\varphi$2j equal. The equation for angle $\varphi$ (of membrane i at joint radius $\mathbf{r_J}$) from membrane theory is:

$$\sin \phi_{i,j} = \frac{r_j^{\,2} - r_e^{\,2}}{r_{ci}^{\,2} - r_e^{\,2}} \left[ \frac{r_{ci}^{\,2} - r_j^{\,2} \cos^2 \beta_{ci}}{r_{ci}^{\,2} \sin^2 \beta_{ci}} \right]^{1/2}$$

Setting $\varphi$1j = $\varphi$2j and solving for $\mathbf{r_J}$:

$$r_j = \left[ \frac{\left(r_{c1}^{\,2} - r_e^{\,2}\right)^2 r_{c1}^{\,2} \sin^2 \beta_{c1} r_{c2}^{\,2} - \left(r_{c2}^{\,2} - r_e^{\,2}\right)^2 r_{c2}^{\,2} \sin^2 \beta_{c2} r_{c1}^{\,2}}{\left(r_{c1}^{\,2} - r_e^{\,2}\right)^2 r_{c1}^{\,2} \sin^2 \beta_{c1} \cos^2 \beta_{c2} - \left(r_{c2}^{\,2} - r_e^{\,2}\right)^2 r_{c2}^{\,2} \sin^2 \beta_{c2} \cos^2 \beta_{c1}} \right]^{1/2}$$

Once $\mathbf{r_J}$ is defined, $\varphi$ and $N\varphi$ at the joint can be calculated and the parameters of the complex membrane are fully defined.

With the complex membrane parameters defined, the design parameters that determine the shape can be examined and then optimized. Since no analytical function exists for the shape, numerical methods can be used to draw the shape of each membrane from the crown to the joint. From the resulting shape the widths of each belt and the overall belt package can be determined. Further tuning of $\mathbf{r_{e1}}$, $\mathbf{r_{e2}}$ and the bias belt angles $\beta$c1 and $\beta$c2 within the acceptable range for manufacturing can be used to optimize the shape and belt widths for the given max belt radius rc2 and belt groove depth.

**Example Design:** Fig. 3, Fig. 4 and Fig. 10 show conceptual views of an example design of the complex belt according to the invention now having tread reinforcing layers **115, 125,** and **135** having reinforcement elements of substantially linear reinforcements arranged in opposing layers or belt plies, and each of the opposing layers has a bias angle $\beta$ relative to the circumferential direction (see Fig. 6). The bias angles $\beta$ are equal in magnitude and opposite in direction relative to the circumferential direction for each opposing layer. It is within the scope of the invention that the opposing layers comprise bias angles β that are not equal and opposite as well as reinforcements that may not be linear, such as wavy reinforcements. Furthermore, for manufacturing ease, the reinforcements may be embedded in an uncured rubber layer. The three-dimensional schematics are idealized views of the belt cords. The cords illustrate the cord paths within the belts, however the figures show the cords spaced further apart than they would be in an actual belt.

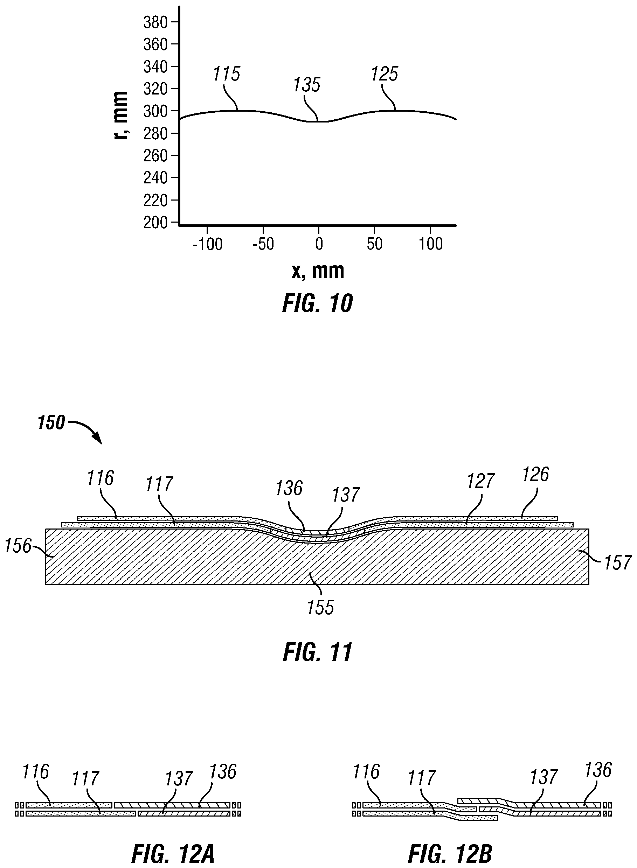

Fig. 10 depicts a meridian profile of the tire **100** having a complex belt arrangement. The central belt plies **136** and **137** of the central tread reinforcement layer **135** are applied at a small bias angle, which less than the critical angle. The left belt plies **116** and **127** of the left tread reinforcement layer **115** are applied at a larger bias angle, which greater than the critical angle. The right belt plies **126** and **127** of the right tread reinforcement layer **115** are also applied at a larger bias angle, which greater than the critical angle. This design has an outer radius of 300 mm and a groove depth of 10 mm. The design was optimized to produce a belt package with overall width around 250 mm corresponding to a tire **100** of a size 335/25ZR20.

As the complex belt shape is not known to one skilled in the art, it will be useful to address some tire construction process considerations. An approach to constructing a prototype tire as shown in Fig. 11 may be to use a tire building form **150** having a complex transverse profile that is not of a cylindrical shape as may be used for conventional tires. In this case, separate central belt plies **136** and **137** would be used for the central tread reinforcing section **135**. Likewise, separate left belt plies **116** and **117** would be used for the left tread reinforcing section **115**, and separate right belt plies **126** and **127** would be used for the right tread reinforcing section **125**. The tire building form **150** may be employed to lay the belts at the desired radii. Such a process could potentially be used in industrial production; however, additional equipment and process time to produce such a tire may be incurred. Therefore, it is within the scope of the invention to imagine other flexible tire manufacturing process to achieve the complex profile of the tire **100.**

It is common in the construction of tires to apply the belt plies at a radius slightly less than the final radius in the cured tire to accommodate the clearances necessary to load of the tire in a curing mold. During the molding of the tire the belt plies are forced radially outward to their final position. This radial movement causes the belt angles to be reduced to accommodate the new radius which is larger than the radius at which the belts were applied. This effect is referred to as pantographing since the geometric change is similar to a pantograph mechanism. When the belt plies are applied at a small angle such as the exemplary range of 10 to 15 degrees, it may be difficult to achieve the desired pantographing, and the belts must be posed very near their final radius. The central belt plies **136** and **137** pose this problem since they are at such a shallow bias angle. In the example shown herein, the central belt plies **136** and **137** have a bias angle of 11.95 deg at a radius of 310 mm. These belts are limited to a maximum of 6.9 mm growth in radius before the belt angles become nearly circumferential. It should be further recognized that any such belt movement would also be accompanied by an undesirable reduction in belt width. A tire building form **150** having a complex transverse profile having a central groove **155** will help to minimize this problem.

An approach to multiple belt layers, known in the art, is to apply continuous belt plies corresponding to the left and right tread reinforcing layers across the full width, and then to apply belt plies of the central tread reinforcing layer **135** radially outward of the left and right tread reinforcing layers. However, laying the continuous plies across the tire building form **150** with a central groove **155** causes significant manufacturing problems. In an embodiment of the tire **100,** the tire is manufactured using separate reinforcing layers forming butt joints at the lateral extremities of the belt plies. Fig. 10 represents the most basic form of the butt joints where the all belt plies end at a common axial distance equal to the width of the central tread reinforcing layers section 135.

Another proposed arrangement of the belt plies on a tire building form **150** having a complex transverse profile is shown in Figure 11. In this arrangement, the central belt plies **136** and **137** are applied in the central groove **155** at a radius very close their final radius. In addition, left belt plies **116** and **117** and the right belt plies **126** and **127** are applied at a radius very close to their final crown radius on the lateral sections **156** and **157** of the tire building form **150.** As shown in Fig. 11, the lateral sections **156** and **157** have a cylindrical shape. However, it is within the scope of the invention to optimize further the transverse profiles of the lateral sections **156** and **157** comprising more complex profiles that have been illustrated herein.

It is important for the durability of the tire to provide a capability to transfer the shear stresses in the rubber skim layers of the belt plies from one belt ply to another. Figures 11 and 12a shows an example having a simple overlap portion where the number of belt plies or reinforcing elements remains constant across the joint. Specifically for the example of Fig. 12a that the left belt ply **116** terminates at a position axially inward from the end of the belt ply **117** to form an overlap portion with the central belt plies **136** and **137**. Similarly, on the right side of the tire **100,** the right belt ply **126** terminates at a position axially inward from the end of the belt ply **127** to form an overlap portion with the central belt plies **136** and **137**. Therefore, an overlap portion of width $w_1$ is created. The amount of overlap width $w_1$ may be a function of the intended use of the tire and would vary accordingly. In this example, the shear stresses are transferred through a single layer of rubber skim layer at the interfaces between the belt plies. The respective belt plies would be applied such that the plies **116, 126,** and **136** would have the same sense of the bias angle β. The respective belt angles the plies **117,127,** and **137** would have the opposite sense of the bias angle β.

Fig. 12b depicts an alternative example of the belt ply overlap whose object is to improve the transfer of shear stresses between the belt plies. In this example, the amount of overlap is increased such that three belt plies overlap at the interface. This would both strengthen the belt package at the joint and provide substantially more area for transfer of shear stresses in the rubber skim layers. In the example shown, the belt ply **116** terminates at a position axially inward of the belt ply **136** to form a first overlap of width $w_{2A}$. The belt ply **117** terminates axially outward of the end of belt ply **116** and abuts belt ply **136**. Finally, belt ply **137** terminates a position axially outward of the end of belt ply **117** to form a second overlap of width $w_{2B}$. The first and second overlaps of width $w_{2A}$ and $w_{2B}$ combine to form an overlap zone of width $w_2$. In general, it would be expected that the overlap $w_2$ would be greater than the overlap portion $w_1$ of the previous example. In this manner, the joints have significantly more area for transfer of the shear stresses. In the example shown, the belt ply **136** would have a left-hand orientation and the belt ply **137** a right-hand orientation of the bias angle $\beta$. This will provide a left-right-left orientation of the three plies within the joint region. It should be noted that in these overlap portions, the path of the complex belt arrangement may depart from the ideal shapes to accommodate the multiple belt ply layers. In this instance, it is desirable to attempt to have the central plane belt plies conform as closely as possible to the ideal shape.

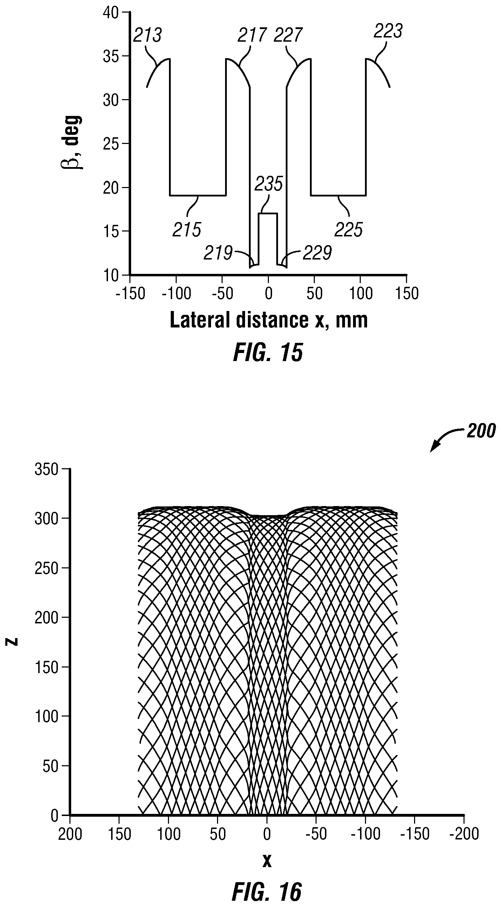

In a second exemplary embodiment, a tire **200** has tread reinforcing layers wherein the bias angle $\beta$ of the reinforcements varies continuously in the axial direction. The tire **200** shown in Fig. 13 has the same or similar external appearance as the tire **100** depicted in Fig. 2. That is, the tire **200** comprises a left tread portion **210** and a right tread portion **220**, wherein the tread portions are axially separated by a longitudinally oriented groove **230**. In this exemplary embodiment of tire **200**, the groove **230** is much wider and deeper than the grooves commonly found on conventional pneumatic tires. It is possible for one or more of the tread reinforcing layers to have a continuously varying bias angle $\beta$ of the reinforcement elements in the axial direction of the tire **200**. The individual tread reinforcing layers may be joined as described above for the tire **100**. It is also possible to have tread reinforcement that is a single, unitary or continuous, tread reinforcing layer extending the width of the tire in which the bias angles $\beta$ of the reinforcement elements are continuously variable in the axial direction. This arrangement is depicted in Fig. 15. In this instance, the reinforcement elements also extend the width of the tire.

As will be described herebelow, the use of tread reinforcing layers with a continuously varying angle of the reinforcements has an advantageous result that permits an arbitrary shape to the tread reinforcing layer. This arbitrary shape is realized by varying the angle $\beta$ in the same manner as described previously for the tire **100** to maintain the equilibrium shape of the membrane. Fig. 14 depicts a profile complex belt arrangement in a meridian plane of the tire **200** comprising discrete segments of the continuously varying tread reinforcements. The shape depicted in Fig. 14 has a flat, or cylindrical, shape of the reinforcement layer throughout most of the left tread portion and the right tread portion of the tire **200**. For very wide, low profile tires, such a flat tread profile is advantageous for many performance parameters. Beginning at the left axial extent, the tread reinforcing layer has a left outer convex section **213**, a left flat section **215**, a left inner convex section **217**, a left inner concave section **219** and a flat central section **235**. Beginning at the right axial extent, the tread reinforcing layer has a right outer convex section **223**, a right flat section **225**, and a right inner convex section **227**, and a right inner concave section **229**. This example is non-limiting in its use of the flat sections in the tread and the central section. It is within the scope of the invention for the left flat section **215** and the right flat section **225** to also be convex, similar to the design of the tire **100**. Similarly, the central section **213** may be concave, similar to the design of the tire **100**.

The bias angle $\beta$ of the curves may be determined by using the membrane equilibrium equations. The desired curves provide a radius of curvature and angle phi at each point of the curve. The membrane equilibrium equations can then be solved at each point to determine the corresponding $r_c$ and $\beta_c$ of the curve.

$$r_c = f'\left(r_e, r, r_1, \phi\right)$$

$$\beta_c = g'\left(r_e, r, r_1, \phi\right)$$

At certain points of the curve the radius of curvature may be too large or too small to be realized by a membrane curve in equilibrium, or the bias angle $\beta$ may need to be restricted to a reasonable range due to manufacturability concerns. In this case values of $r_c$ and $\beta_c$ that provide an approximation of the desired radius of curvature may be selected, or the desired curve may be modified to ensure that a realizable solution may be determined at each point.

With the values of $r_c$ and $\beta_c$ determined at each point of the curve, the angle $\beta$ of the reinforcement elements may be determined using the normal law of conformation. The bias angles $\beta$ required for tire **200** are depicted in Fig. 15 as a function of the axial distance from the centerline of the tire **200**. Note that in the left flat section **215** and the right flat section **225**, the bias angle $\beta$ is constant and corresponds to the critical belt angle for the radius of those sections.

Similarly other sections of the curve the bias angle β varies, but retains the characteristic that the angle is below the critical belt angle in sections that are convex and above the critical belt angle in sections that are concave. Figure 16 depicts the resulting equilibrium membrane shape in three dimensions with the cord paths of the reinforcement elements shown.

The continuous variation of the bias angles β across the width of the tire may be accomplished by preparing individual cords with the specified angle variation along the axis of the cord, and thereafter applying a plurality of these cords to the carcass of a tire. One such method and apparatus for applying the cords to the carcass of the tire is disclosed in United States Patent 5,505,802, which is incorporated herein by reference in its entirety and for all purposes. In this reference, the tire carcass is manufactured on a rigid form whose shape is close to the desired shape of the cured tire. The cords are applied to an exposed layer of uncured rubber in sequential fashion until the belt ply is completed. Then another layer of uncured rubber is applied on top of the cords. The process of applying the cords is then repeated with the cords oriented into the opposite direction to eventually form a bias ply. An advantage of building the tire on such a rigid form is there is little or no conformation of the belt during curing of the tire.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art, however, without departing from the scope of the appended claims.

## Claims

1. A tire (100, 200) comprising a tread having at least a left tread portion (110, 210), a right tread portion (120, 220), wherein the right tread portion (120, 220) and the left tread portion (110, 210) are axially separated by a longitudinally oriented groove (130, 230);
a carcass layer (111), a left sidewall (112) and a right sidewall (122), a left bead portion (114) and a right bead portion (124);
the left sidewall (112) extending radially to join the left tread portion (110, 210) and the right sidewall (122) extending radially to join the right tread portion (120, 220), and when the tire (100, 200) is mounted on a rim, the tread portions (110, 120, 210, 220), the left sidewall (112) and the right sidewall (122), the left bead portion (114) and the right bead portion (124) enclose a cavity by which the tire (100, 200) is inflated for operation under various applied loads;
a tread reinforcement extending in an axial direction of the tire (100, 200) comprising a plurality of tread reinforcing layers (115, 125, 135) wherein a plurality of reinforcement elements are formed of parallel reinforcements arranged in opposing layers, and each of the opposing layers has a bias angle β relative to a circumferential direction of the tire (100, 200),
wherein the carcass layer (111) comprises a plurality of reinforcing cords to form the left sidewall (112) and the right sidewall (122), the reinforcing cords of the carcass layer (111) are anchored, respectively, in the left bead portion (114) and the right bead portion (124), and;
the bias angle β of the reinforcement elements in each of the tread reinforcing layers (115, 125, 135) corresponds to a plurality of equilibrium membrane shapes determined from membrane equilibrium equations that are joined laterally together in a continuous, complex belt shape, **characterized in that** a central tread reinforcing layer (135) corresponding to the longitudinally oriented groove (130, 230) has a concave shape and a bias angle $\beta_1$ that is less than a bias angle $\beta_2$ of both a left tread reinforcing layer (115) and a right tread reinforcing layer (125), and a crown radius of the central tread reinforcing layer (135) is less than a crown radius of the left tread reinforcing layer (115) and less than a crown radius of the right tread reinforcing layer (125).

2. The tire (100, 200) according to Claim 1, wherein one of the left tread reinforcing layer (115) and the right tread reinforcing layer (125) has a convex shape.

3. The tire (100, 200) according to Claim 1, wherein the bias angle β of the reinforcement elements is equal and opposite in the opposing layers.

4. The tire (100, 200) according to Claim 1, further wherein one or more of the tread reinforcing layers (115, 125, 135) has a continuously varying bias angle β of the reinforcement elements in the axial direction of the tire (100, 200).

5. The tire (100, 200) according to Claim 1, wherein the tread reinforcing layer (115, 125, 135) comprises a plurality of elements in each of the tread reinforcing layers (115, 125, 135) extending nonlinearly and with a variable bias angle β in the axial direction.

6. The tire (100, 200) according to Claim 1, wherein the tread reinforcement is a single, unitary or continuous, tread reinforcing layer (115, 125, 135) extending a width of the tire (100, 200) in which the bias angles β of the reinforcement elements are continuously variable in the axial direction.

7. The tire (100, 200) according to Claim 6, wherein the tread reinforcement comprises a left outer convex section (213), a left flat section (215), and a left inner convex section (217), a left inner concave section (219), a central section (235), a right inner concave section (229), a right inner convex section (227), a right flat section (225), and a right outer convex section (223).

8. There tire (100, 200) according to Claim 1, wherein the tread reinforcement further comprises a left tread reinforcing layer (115) in the left tread portion (110, 210), a right tread reinforcing layer (125) in the right tread portion (120, 220) and a central tread reinforcing layer (135) radially inward of the longitudinally oriented groove (130, 230).

9. The tire (100, 200) according to Claim 1, wherein a shape of the tread reinforcing layers (115, 125, 135) in the left tread portion (110, 210) and the right tread portion (120, 220) has a convex shape and is joined laterally to a central tread reinforcing layer (135) having a concave shape to form a tread reinforcement extending a width of the tire (100, 200).

10. The tire (100, 200) according to Claim 1, wherein a central groove (155) has a depth in the radial direction greater than a wearable tread depth of the tire (100, 200).

11. The tire (100, 200) according to Claim 1, wherein the tread reinforcing layers (115, 125, 135) further comprises a plurality of belt plies (116, 117, 126, 127, 136, 137) and a joint between the belt plies (116, 117, 126, 127, 136, 137) of adjacent tread reinforcing layers (115, 125, 135) has an overlap portion of the belt plies (116, 117, 126, 137, 137).

12. The tire (100, 200) according to Claim 1, wherein the longitudinally oriented groove (130, 230) has a depth in the radial direction greater than a wearable tread depth of the tire (100, 200) as defined by industry standard tread wear indicators.

13. The tire (100, 200) according to Claim 1, wherein the further comprises a plurality of longitudinally oriented grooves (130, 230) and each of the longitudinally oriented grooves (130, 230) is separated laterally by a tread portion (110, 120, 210 and 220).

## Patentansprüche

1. Reifen (100, 200), der eine Lauffläche umfasst, die mindestens einen linken Laufflächenteil (110, 210), einen rechten Laufflächenteil (120, 220) hat, wobei der rechte Laufflächenteil (120, 220) und der linke Laufflächenteil (110, 210) durch eine in Längsrichtung orientierte Rille (130, 230) axial getrennt sind; eine Karkassenschicht (111), eine linke Seitenwand (112) und eine rechte Seitenwand (122), ein linker Wulstteil (114) und ein rechter Wulstteil (124); wobei die linke Seitenwand (112) sich radial so erstreckt, dass sie sich mit dem linken Laufflächenteil (110, 210) verbindet, und die rechte Seitenwand (122) sich radial so erstreckt, dass sie sich mit dem rechten Laufflächenteil (120, 220) verbindet, und wenn der Reifen (100, 200) auf einer Felge montiert ist, umschließen die Laufflächenteile (110, 120, 210, 220), die linke Seitenwand (112) und die rechte Seitenwand (122), der linke Wulstteil (114) und der rechte Wulstteil (124) einen Hohlraum, durch den der Reifen (100, 200) zum Betrieb unter verschiedenen angelegten Lasten aufgepumpt wird; eine Laufflächenverstärkung, die sich in einer axialen Richtung des Reifens (100, 200) erstreckt, wobei sie eine Vielzahl von Reifenverstärkungsschichten (115, 125, 135) enthält, wobei eine Vielzahl von Verstärkungselementen von parallelen Verstärkungen gebildet werden, die in einander gegenüberliegenden Schichten angeordnet sind, und jede der einander gegenüberliegenden Schichten hat einen Einspannwinkel β gegenüber einer Umfangsrichtung des Reifens (100, 200), wobei die Karkassenschicht (111) eine Vielzahl von Verstärkungskordfäden umfasst, um die linke Seitenwand (112) und die rechte Seitenwand (122) zu bilden, die Verstärkungskordfäden der Karkassenschicht (111) sind im linken Wulstteil (114) bzw. rechten Wulstteil (124) verankert, und;

der Einspannwinkel β der Verstärkungselemente in jeder der Laufflächen-Verstärkungsschichten (115, 125, 135) entspricht einer Vielzahl von Gleichgewichts-Membranformen, die aus Membran-Gleichgewichtsgleichungen bestimmt werden, die seitlich miteinander in einer kontinuierlichen komplexen Gurtform verbunden sind, **dadurch gekennzeichnet, dass** eine zentrale Laufflächenverstärkungsschicht (135), die der longitudinal ausgerichteten Rille (130, 230) entspricht, eine konkave Form und einen Einspannwinkel $\beta_1$ hat, der kleiner als ein Einspannwinkel $\beta_2$ sowohl einer linken Laufflächenverstärkungsschicht (115) als auch rechten Laufflächenverstärkungsschicht (125) ist, und ein Scheitelradius der zentralen Laufflächenverstärkungsschicht (135) ist kleiner als ein Scheitelradius der linken Laufflächenverstärkungsschicht (115) und kleiner als ein Scheitelradius der rechten Laufflächenverstärkungsschicht (125).

2. Reifen (100, 200) nach Anspruch 1, wobei eine Schicht aus der linken Laufflächenverstärkungsschicht (115) und der rechten Laufflächenverstärkungsschicht (125) eine konvexe Form hat.

3. Reifen (100, 200) nach Anspruch 1, wobei der Einspannwinkel β der Verstärkungselemente gleich oder entgegengesetzt in den einander gegenüberliegenden Schichten ist.

4. Reifen (100, 200) nach Anspruch 1, wobei ferner eine oder mehrere der Laufflächenverstärkungsschichten (115, 125, 135) einen kontinuierlich variierenden Einspannwinkel β der Verstärkungselemente in der axialen Richtung des Reifens (100, 200) hat bzw. haben.

5. Reifen (100, 200) nach Anspruch 1, wobei die Laufflächenverstärkungsschicht (115, 125, 135) eine Vielzahl von Elementen in jeder der Laufflächenverstärkungsschichten (115, 125, 135) umfasst, die sich nichtlinear und mit einem variablen Einspannwinkel β in der axialen Richtung erstrecken.

6. Reifen (100, 200) nach Anspruch 1, wobei die Laufflächenverstärkungsschicht eine einzige, einheitliche oder kontinuierliche Laufflächenverstärkungsschicht (115, 125, 135) ist, die sich über eine Breite des Reifens (100, 200) erstreckt, wobei die Einspannwinkel β der Verstärkungselemente in der axialen Richtung kontinuierlich variabel sind.

7. Reifen (100, 200) nach Anspruch 6, wobei die Laufflächenverstärkung einen linken äußeren konvexen Abschnitt (213), einen linken ebenen Abschnitt (215) und einen linken inneren konvexen Abschnitt (217) einen linken inneren konkaven Abschnitt (219), einen zentralen Abschnitt (235), einen rechten inneren konkaven Abschnitt (229), einen rechten inneren konvexen Abschnitt (227), einen rechten ebenen Abschnitt (225) und einen rechten äußeren konvexen Abschnitt (223) umfasst.

8. Reifen (100, 200) nach Anspruch 1, wobei die Laufflächenverstärkung ferner eine linke Laufflächenverstärkungsschicht (115) im linken Laufflächenteil (110, 210), eine rechte Laufflächenverstärkungsschicht (125) im rechten Laufflächenteil (120, 220) und eine zentrale Laufflächenverstärkungsschicht (135) umfasst, die radial einwärts von der longitudinal orientierten Rille (130, 230) liegt.

9. Reifen (100, 200) nach Anspruch 1, wobei eine Form der Laufflächenverstärkungsschichten (115, 125, 135) im linken Laufflächenteil (110, 210) und im rechten Laufflächenteil (120, 220) eine konvexe Form hat und lateral mit einer zentralen Laufflächenverstärkungsschicht (135) verbunden ist, die eine konkave Form hat, um eine Laufflächenverstärkung zu bilden, die sich über eine Breite des Reifens (100, 200) erstreckt.

10. Reifen (100, 200) nach Anspruch 1, wobei eine zentrale Rille (155) eine Tiefe in der radialen Richtung hat, die größer als eine abnutzbare Laufflächentiefe des Reifens (100, 200) ist.

11. Reifen (100, 200) nach Anspruch 1, wobei die Laufflächenverstärkungsschichten (115, 125, 135) ferner eine Vielzahl von Gurtschichten (116, 117, 126, 127, 136, 137) umfassen, und eine Verbindung zwischen Gurtschichten (116, 117, 126, 127, 136, 137) von benachbarten Laufflächenverstärkungsschichten (115, 125, 135) hat einen Überlappungsteil der Gurtschichten (116, 117, 126, 127, 136, 137).

12. Reifen (100, 200) nach Anspruch 1, wobei die longitudinal orientierte Rille (130, 230) eine Tiefe in der radialen Richtung hat, die größer als eine abnutzbare Laufflächentiefe des Reifens (100, 200) ist, wie durch Laufflächen-Verschleißindikatoren nach Industrienorm definiert.

13. Reifen (100, 200) nach Anspruch 1, wobei die Lauffläche ferner eine Vielzahl von longitudinal orientierten Rillen (130, 230) umfasst, und jede der longitudinal orientierten Rillen (130, 230) wird lateral durch einen Laufflächenteil (110, 120, 210 und 220) abgetrennt.

**Revendications**

1. Pneumatique (100, 200) comprenant une bande de roulement ayant au moins une partie de bande de roulement gauche (110, 210), une partie de bande de roulement droite (120, 220), dans lequel la partie de bande de roulement droite (120, 220) et la partie de bande de roulement gauche (110, 210) sont séparées axialement par une rainure orientée longitudinalement (130, 230) ;
une couche de carcasse (111), un flanc gauche (112) et un flanc droit (122), une partie de talon gauche (114) et une partie de talon droite (124) ;
le flanc gauche (112) s'étendant radialement pour joindre la partie de bande de roulement gauche (110, 210) et le flanc droit (122) s'étendant radialement pour joindre la partie de bande de roulement droite (120, 220), et quand le pneumatique (100, 200) est monté sur une jante, les parties de bande de roulement (110, 120, 210, 220), le flanc gauche (112) et le flanc droit (122), la partie de talon gauche (114) et la partie de talon droite (124) entourent une cavité par laquelle le pneumatique (100, 200) est gonflé pour fonctionnement sous diverses charges appliquées ;
un renforcement de bande de roulement s'étendant dans une direction axiale du pneumatique (100, 200) comprenant une pluralité de couches de renforcement de bande de roulement (115, 125, 135) dans lequel une pluralité d'éléments de renforcement sont formés de renforcements parallèles agencés dans des couches opposées, et chacune des couches opposées a un angle de biais β relativement à la direction circonférentielle du pneumatique (100, 200), dans lequel la couche de carcasse (111) comprend une pluralité de fils câblés de renforcement pour former le flanc gauche (112) et le flanc droit (122), les fils câblés de renforcement de la couche de carcasse (111) sont ancrés, respectivement, dans la partie de talon gauche (114) et la partie de talon droite (124), et ;
l'angle de biais β des éléments de renforcement dans chacune des couches de renforcement de bande de roulement (115, 125, 135) correspond à une pluralité de formes de membranes à l'équilibre déterminées à partir d'équations de membranes à l'équilibre qui sont jointes latéralement ensemble dans une forme de ceinture complexe continue, **caractérisé en ce qu'**une couche de renforcement de bande de roulement centrale (135) correspondant à la rainure orientée longitudinalement (130, 230) a une forme concave et un angle de biais β1 qui est inférieur à un angle de biais β2 d'à la fois une couche de renforcement de bande de roulement gauche (115) et une couche de renforcement de bande de roulement droite (125), et un rayon de couronne de la couche de renforcement de bande de roulement centrale (135) est inférieur à un rayon de couronne de la couche de renforcement de bande de roulement gauche (115) et inférieur à un rayon de couronne de la couche de renforcement de bande de roulement droite (125).

2. Pneumatique (100, 200) selon la revendication 1, dans lequel l'une de la couche de renforcement de bande de roulement gauche (115) et de la couche de renforcement de bande de roulement droite (125) a une forme convexe.

3. Pneumatique (100, 200) selon la revendication 1, dans lequel l'angle de biais β des éléments de renforcement est égal et opposé dans les couches opposées.

4. Pneumatique (100, 200) selon la revendication 1, dans lequel en outre une ou plusieurs des couches de renforcement de bande de roulement (115, 125, 135) a un angle de biais β des éléments de renforcement variant continûment dans la direction axiale du pneumatique (100, 200).

5. Pneumatique (100, 200) selon la revendication 1, dans lequel la couche de renforcement de bande de roulement (115, 125, 135) comprend une pluralité d'éléments dans chacune des couches de renforcement de bande de roulement (115, 125, 135) s'étendant non linéairement et avec un angle de biais β variable dans la direction axiale.

6. Pneumatique (100, 200) selon la revendication 1, dans lequel la bande de roulement est une couche de renforcement de bande de roulement (115, 125, 135) seule, unitaire ou continue, s'étendant sur une largeur du pneumatique (100, 200) dans lequel les angles de biais β des éléments de renforcement sont variables continûment dans la direction axiale.

7. Pneumatique (100, 200) selon la revendication 6, dans lequel le renforcement de bande de roulement comprend une section convexe extérieure gauche (213), une section plate gauche (215), une section convexe intérieure gauche (217), une section concave intérieure gauche (219), une section centrale (235), une section concave intérieure droite (229), une section convexe intérieure droite (227), une section plate droite (225), et une section convexe extérieure droite (223).

**8.** Pneumatique (100, 200) selon la revendication 1, dans lequel le renforcement de bande de roulement comprend en outre une couche de renforcement de bande de roulement gauche (115) dans la partie de bande de roulement gauche (110, 210), une couche de renforcement de bande de roulement droite (125) dans la partie de bande de roulement droite (120, 220) et une couche de renforcement de bande de roulement centrale (135) radialement vers l'intérieur de la rainure orientée longitudinalement (130, 230).

**9.** Pneumatique (100, 200) selon la revendication 1, dans lequel une forme des couches de renforcement de bande de roulement (115, 125, 135) dans la partie de bande de roulement gauche (110, 210) et la partie de bande de roulement droite (120, 220) a une forme convexe et est jointe latéralement à une couche de renforcement de bande de roulement centrale (135) ayant une forme concave pour former un renforcement de bande de roulement s'étendant sur une largeur du pneumatique (100, 200).

**10.** Pneumatique (100, 200) selon la revendication 1, dans lequel une rainure centrale (155) a une profondeur dans la direction radiale supérieure à une profondeur de bande de roulement usable du pneumatique (100, 200).

**11.** Pneumatique (100, 200) selon la revendication 1, dans lequel les couches de renforcement de bande de roulement (115, 125, 135) comprennent en outre une pluralité de nappes de ceinture (116, 117, 126, 127, 136, 137) et un joint entre les nappes de ceinture (116, 117, 126, 127, 136, 137) de couches de renforcement de bande de roulement (115, 125, 135) adjacentes a une partie superposée sur les nappes de ceinture (116, 117, 126, 127, 136, 137).

**12.** Pneumatique (100, 200) selon la revendication 1, dans lequel la rainure orientée longitudinalement (130, 230) a une profondeur dans la direction radiale supérieure à une profondeur de bande de roulement usable du pneumatique (100, 200) comme définie par les indicateur d'usure de bande de roulement standard de l'industrie.

**13.** Pneumatique (100, 200) selon la revendication 1, dans lequel le comprend en outre une pluralité de rainures orientées longitudinalement (130, 230) et chacune des rainures orientées longitudinalement (130, 230) est séparée latéralement par une partie de bande de roulement (110, 120, 210 et 220).

**FIG. 1**
**(Prior Art)**

**FIG. 2**

**FIG. 3**

EP 2 797 755 B1

**FIG. 4**

**FIG. 5**

EP 2 797 755 B1

FIG. 6B

FIG. 6A

**FIG. 7**

**FIG. 8**

**FIG. 9**

**FIG. 10**

**FIG. 11**

**FIG. 12A**          **FIG. 12B**

**FIG. 13**

**FIG. 14**

FIG. 15

FIG. 16

**REFERENCES CITED IN THE DESCRIPTION**

**Patent documents cited in the description**

- DE 102004029987 A1
- US 3024828 A
- JP H0632111 A
- US 5176766 A
- US 3830273 A
- US 5505802 A

**Non-patent literature cited in the description**

- Mechanics of Pneumatic Tires